# EUROPÄISCHE PATENTSCHRIFT

(11) **EP 3 198 312 B1**
(45) Veröffentlichungstag und Bekanntmachung des Hinweises auf die Patenterteilung: **03.06.2026**
(21) Anmeldenummer: 15775647.9
(22) Anmeldetag: 21.09.2015
(51) Int. Cl.: G02B 5/18, G02B 27/01, F21V 8/00

(54) **VERFAHREN ZUM HERSTELLEN EINES OPTIKELEMENTES**
METHOD FOR PRODUCING AN OPTICAL ELEMENT
PROCÉDÉ DE FABRICATION D'UN ÉLÉMENT OPTIQUE

(30) Priorität: 26.09.2014 DE 102014113966
(43) Veröffentlichungstag der Anmeldung: 02.08.2017
(73) Patentinhaber: tooz technologies GmbH, 73430 Aalen (DE)
(72) Erfinder: HOFMANN, Jens, 07743 Jena (DE); MICHELS, Georg, 73430 Aalen (DE); PÜTZ, Jörg, 73431 Aalen (DE); KRAUSE, Wolf, 73457 Essingen (DE); KELCH, Gerhard, 73434 Aalen (DE)
(74) Vertreter: Patentanwälte Geyer, Fehners & Partner mbB
(86) Internationale Anmeldenummer: PCT/EP2015/071590
(87) Internationale Veröffentlichungsnummer: WO 2016/046125

(56) Entgegenhaltungen:
- WO-A1-2011/088161
- JP-A- 2012 068 441
- US-A1- 2014 043 850
- US-A1- 2014 043 850

## Beschreibung

Die vorliegende Erfindung betrifft ein Verfahren zum Herstellen eines Optikelementes, das einen für einen vorbestimmten Wellenlängenbereich transparenten Körper aufweist, in dem eine optisch wirksame Struktur eingebettet ist, mit den Merkmalen des Oberbegriffs des Anspruches 1.

Ein solches Optikelement kann z.B. als Brillenglas für eine auf den Kopf eines Benutzers aufsetzbare und ein Bild erzeugende Anzeigevorrichtung verwendet werden, wobei das Optikelement Teil einer Abbildungsoptik der Anzeigevorrichtung sein kann und die Abbildungsoptik das erzeugte Bild im auf dem Kopf des Benutzers aufgesetzten Zustand der Anzeigevorrichtung so abbildet, dass es der Benutzer als virtuelles Bild wahrnehmen kann.

Es besteht zunehmend der Bedarf, ein solches Optikelement mit einer vergrabenen optisch wirksamen Struktur in großen Stückzahlen und hoher Genauigkeit herstellen zu können.

Die WO 2011/088161 A1 beschreibt mikrostrukturierte optische Filme und Herstellungsverfahren dafür. Die US 2014/0043850 A1 beschreibt ein Verfahren zum Herstellen eines Optikelements und die JP 2012 068441 A1 beschreibt ein Verfahren zum Herstellen eines Optikelements, wobei das Verfahren die Merkmale des Oberbegriffs des Anspruches 1 aufweist.

Es ist daher Aufgabe der Erfindung, ein Verfahren zum Herstellen eines Optikelementes, das einen transparenten Körper aufweist, in dem eine optisch wirksame Struktur eingebettet ist, bereitzustellen, das eine Herstellung des Optikelementes mit hoher Qualität bei großen Stückzahlen ermöglicht.

Die Erfindung ist in den Ansprüchen 1, 13 und 15 definiert. Vorteilhafte Weiterbildungen sind in den abhängigen Ansprüchen angegeben.

Insbesondere kann die optisch wirksame Struktur vollständig im transparenten Körper eingebettet sein, so dass sie sich zu keiner äußeren Grenzfläche des transparenten Körpers erstreckt. Bevorzugt ist die optisch wirksame Struktur in ihren Abmessungen kleiner als die Abmessungen des transparenten Körpers. Man kann auch sagen, dass die optisch wirksame Struktur nur in einem Teil des transparenten Körpers ausgebildet ist. Die eingebettete optisch wirksame Struktur kann eine maximale laterale Abmessung aufweisen, die kleiner ist als die maximale laterale Abmessung des transparenten Körpers. Insbesondere kann sie kleiner als 50% der lateralen Abmessung des transparenten Körpers oder auch kleiner als 40%, 30%, 20% der lateralen Abmessung des transparenten Körpers sein. Die optisch wirksame Struktur ist somit bevorzugt im transparenten Körper eingebettet aber nur partiell vorgesehen.

Durch das Durchführen des Schrittes c) mittels Gießens kann die gewünschte Genauigkeit und Reproduzierbarkeit bei der Herstellung auch in hohen Stückzahlen gewährleistet werden.

Bei dem erfindungsgemäßen Verfahren wird nach dem Schritt b) und vor dem Schritt c) auf der optisch wirksamen Beschichtung eine Schutzschicht aus duroplastischem Material durch Gießen aufgebracht. Dazu kann insbesondere das RIM-Verfahren (Reaction Injection Moulding-Verfahren) eingesetzt werden. Dabei können z.B. zwei Komponenten unmittelbar vor dem Injizieren in eine Form vermischt werden, so dass die Komponenten miteinander reagieren und ein gewünschtes chemisch vernetztes Polymer bilden können. Der erste transparente Teilkörper ist dabei bevorzugt in einer entsprechenden Form positioniert, so dass die gewünschte Schutzschicht gebildet werden kann.

Die Deckschicht wird bevorzugt auf der gesamten Oberseite des ersten transparenten Teilkörpers (einschließlich der Schutzschicht, sofern vorhanden) gebildet. Der Schritt des Bildens der Deckschicht kann z.B. mittels eines Spritzgußverfahrens durchgeführt werden. Es ist auch möglich, den Schritt des Bildens der Deckschicht mittels eines RIM-Verfahrens durchzuführen.

Bei dem erfindungsgemäßen Verfahren kann der erste Teilkörper aus einem ersten Polymermaterial gebildet sein und kann im Schritt c) zum Aufbringen der Deckschicht ein zweites Polymermaterial auf die Oberseite des ersten Teilkörpers aufgebracht und eine chemische Anbindung des zweiten Polymermaterials an das erste Polymermaterial bewirkt werden.

Das erste Polymermaterial kann ein thermoplastisches Material und/oder ein duroplastisches Material sein. Das zweite Polymermaterial ist ein thermoplastisches Material. Als thermoplastisches Material kann z.B. PMMA (Polymethylmethacrylat, z. B. Plexiglas), PA (Polyamide, z.B. Trogamid CX), COP (Cycloolefin-Polymere, z.B. Zeonex), PC (Polycarbonat, Poly(bisphenol-A-carbonat), z.B. Makrolon), LSR (Liquid Silicone Rubber, z.B. Silopren, Elastosil), PSU (Polysulfon, z.B. Ultrason), PES (Polyethersulfon) und/oder PAS (Polyarylensulfon) verwendet werden. Als duroplastisches Material kann z.B. ADC (Allyl-Diglykolcarbonat, z.B. CR-39), Acrylate (z.B. Spectralite), PUR (Polyurethane, z.B. RAVolution), PU/PUR (Polyharnstoffe, Polyurethane, z.B. Trivex), PTU (Polythiourethane, z.B. MR-8, MR-7) und/oder Polymere auf Episulfid/Polythiol-Basis (z.B. MR-174).

Da im Schritt c) das chemische Anbinden des zweiten Polymermaterials an das erste Polymermaterial bewirkt wird, kann der Schritt c) beispielsweise bei einer Temperatur durchgeführt werden, die unterhalb der Erweichungstemperatur für den ersten Teilkörper liegt. Damit kann das Optikelement mit hoher Qualität bei großen Stückzahlen hergestellt werden. Der Schritt des Bereitstellens des ersten transparenten Körpers kann z.B. mittels eines Spritzgußverfahrens oder eines Spritzprägeverfahrens erfolgen. Solche Verfahren zeichnen sich durch hohe Genauigkeiten aus.

Insbesondere können der erste transparente Teilkörper sowie die Deckschicht aus dem gleichen Material und/oder mittels des gleichen Verfahrens gebildet werden.

Ferner ist es möglich, den ersten transparenten Teilkörper mittels des RIM-Verfahrens zu bilden.

Die optisch wirksame Struktur kann beispielsweise als reflektive und/oder diffraktive Struktur ausgebildet sein. Insbesondere kann die optisch wirksame Struktur als teilreflektive Struktur und/oder wellenlängenabhängige reflektive Struktur ausgebildet sein.

Die Bildung des ersten Teilkörpers und/oder das Aufbringen der Deckschicht kann insbesondere jeweils in zumindest zwei aufeinanderfolgenden Teilschritten durchgeführt werden. Dies führt zu einem verringerten Schwund bei der Herstellung des ersten Teilkörpers und/oder der Deckschicht.

Bei dem erfindungsgemäßen Verfahren können als erstes und zweites Polymermaterial solche Materialien verwendet werden, deren Brechzahlen sich für zumindest eine Wellenlänge aus dem vorbestimmten Wellenlängenbereich um nicht mehr als 0,005 oder 0,001 unterscheiden. Insbesondere können sich die Brechzahlen um nicht mehr als 0,0005 unterscheiden. Bei einem solch geringen Brechzahlunterschied verschwindet quasi optisch die Grenzfläche zwischen den beiden Polymermaterialien für den vorbestimmten Wellenlängenbereich. Insbesondere können die Polymermaterialien so gewählt sein, dass sie im vorbestimmten Wellenlängenbereich die gleiche Dispersion aufweisen.

Bei dem vorbestimmten Wellenlängenbereich kann es sich um den sichtbaren Wellenlängenbereich, den nahen Infrarotbereich, den Infrarotbereich und/oder den UV-Bereich handeln.

Zum Bereitstellen des ersten Teilkörpers gemäß Schritt a) kann ein Urformverfahren (wie z.B. Spritzguß, RIM, Abgießen), ein Umformverfahren (wie z.B. Thermoforming, Hot Embossing), ein abtragendes und/oder trennendes Verfahren (wie z.B. Diamantzerspanung, Ionenbeschuß, Ätzen) eingesetzt werden. Natürlich ist es auch möglich, diese Verfahren zur Bereitstellung des ersten Teilkörpers miteinander zu kombinieren. Insbesondere kann der erste Teilkörper auch mehrteilig ausgebildet sein, wobei für jeden Teil des ersten Teilkörpers die angegebenen Verfahren eingesetzt werden können. Ferner können für den strukturierten Abschnitt bekannte Strukturierungsverfahren verwendet werden. Auch für die Strukturierung können die genannten Verfahren zur Bereitstellung des ersten Teilkörpers eingesetzt werden.

Das Aufbringen der optisch wirksamen Beschichtung gemäß Schritt b) kann beispielsweise durch Aufdampfen, Sputtern, CVD (chemisches Abscheiden aus der Gasphase), Naßbeschichtung, etc. erfolgen. Die Beschichtung kann eine Einzelschicht sein. Es ist jedoch auch möglich, mehrere Schichten aufzubringen. Insbesondere kann auch ein Interferenzschichtsystem aufgebracht werden. Ferner kann zusätzlich zumindest eine Schicht zur Haftvermittlung, eine Schicht zum mechanischen Ausgleich, eine Schutzschicht (Diffusion/Migration, thermischer Schutz, chemischer Schutz, UV-Schutz etc.) aufgebracht werden. Die optisch wirksame Beschichtung kann für spezielle Wellenlängen bzw. Spektralbereiche ausgelegt sein. Ferner kann sie zusätzlich oder alternativ ihre Funktion abhängig vom Einfallswinkel, von der Polarisation und/oder von weiteren optischen Eigenschaften aufweisen. Die optisch wirksame Struktur kann reflektierend, insbesondere hochreflektierend (z.B. spiegelartig), teildurchlässig/teilverspiegelt sein und/oder kann eine Filterwirkung bereitstellen. Ferner kann die optisch wirksame Beschichtung ein diffraktives optisches Element sein.

Des weiteren kann die optisch wirksame Beschichtung eine Trennschicht sein, die eine chemische Anbindung des zweiten Polymermaterials an das erste Polymermaterial im Bereich der optisch wirksamen Struktur verhindert und eine lokale Entformung bewirkt, die zu einem Luftspalt führt. In diesem Fall kann z.B. eine innere Totalreflexion aufgrund des Übergangs vom Polymermaterial zum Luftspalt bewirkt werden.

Die optisch wirksame Beschichtung kann nur auf den strukturierten Abschnitt aufgebracht werden. Alternativ ist es möglich, die optisch wirksame Beschichtung vollflächig aufzubringen und dann in den nicht benötigten Flächenabschnitten zu entfernen. Für ein solches Entfernen kann man z.B. chemisches Ätzen oder Ionenätzen einsetzen.

Für die optisch wirksame Beschichtung kann zumindest ein Metall, zumindest ein Metalloxid, zumindest ein Metallnitrid verwendet werden. Auch ein organisches Material und/oder ein Polymermaterial kann verwendet werden. Ferner können sogenannte Hybridmaterialien, wie z.B. organisch-anorganische Hybridsysteme, organisch-modifizierte Silane/Polysiloxane verwendet werden. Als Trennschicht kann ein chemisch-inerter oder oberflächenaktiver Stoff verwendet werden. Beispiele hierfür sind z.B. Fettsäure-Derivate, Phosphate und fluorierte Silane.

Bei dem erfindungsgemäßen Verfahren können die Schritte a)-c) so durchgeführt werden, dass die optisch wirksame Struktur vollständig im transparenten Körper eingebettet ist. Somit erstreckt sich die optisch wirksame Struktur zu keiner Materialgrenzfläche des transparenten Körpers.

Ferner können die Schritte a)-c) so ausgeführt werden, dass die optisch wirksame Struktur voneinander beabstandete Flächenstücke aufweist, die die gewünschte optische Funktion bereitstellen. Die Flächenstücke können beispielsweise reflektive Flächenstücke sein. Die reflektiven Flächenstücke können eine vollständige Reflexion (nahezu 100%) oder auch nur eine Teilreflexion (teilreflektive Flächenstücke) bewirken. Insbesondere liegen die reflektiven Flächenstücke in keiner gemeinsamen Ebene. Sie können zueinander parallel versetzt sein.

Die reflektiven Flächenstücke können zusammen eine umlenkende Wirkung und gegebenenfalls zusätzlich auch noch eine abbildende Wirkung bereitstellen.

Die Flächenstücke können für sich jeweils als plane Flächenstücke oder auch als gekrümmt ausgebildete Flächenstücke gebildet sein.

Bei dem erfindungsgemäßen Verfahren kann das Optikelement nach Durchführen des Schrittes c) fertiggestellt sein. Es ist jedoch auch möglich, noch zumindest einen materialabtragenden Bearbeitungsschritt durchzuführen, um beispielsweise die vom ersten Teilkörper wegweisende Grenzfläche der Deckschicht zu bearbeiten oder herauszuarbeiten. Gleiches gilt für die von der Deckschicht wegweisende Grenzfläche des ersten Teilkörpers.

Natürlich kann auch noch zumindest ein oberflächenvergütender Verfahrensschritt durchgeführt werden, wie z.B. das Aufbringen einer Antireflexionsbeschichtung, einer Hartschicht, etc. Insbesondere können die aus der Fertigung von Brillengläsern bekannten Vergütungen durchgeführt werden.

Mit dem erfindungsgemäßen Verfahren kann somit das fertige Optikelement bereitgestellt werden. Es ist jedoch auch möglich, dass noch weitere Verfahrensschritte notwendig sind, um das Optikelement so fertigzustellen, dass es für seinen bestimmungsgemäßen Gebrauch einsetzbar ist.

Es wird ferner ein Optikelement mit einem transparenten Körper, in dem eine optisch wirksame Struktur eingebettet ist, bereitgestellt, wobei das Optikelement durch die Schritte des erfindungsgemäßen Verfahrens (einschließlich seiner Weiterbildungen) hergestellt ist.

Insbesondere kann das Optikelement als Brillenglas für eine auf den Kopf eines Benutzers aufsetzbare und ein Bild erzeugende Anzeigevorrichtung ausgebildet sein sowie eine Vorderseite und eine Rückseite, einen Einkoppelabschnitt und einen vom Einkoppelabschnitt beabstandeten Auskoppelabschnitt und einen Lichtführungskanal aufweisen, der Lichtbündel von Pixeln des erzeugten Bildes, die über den Einkoppelabschnitt des Optikelementes in das Optikelement eingekoppelt sind, im Optikelement bis zum Auskoppelabschnitt führt, von dem sie aus dem Brillenglas ausgekoppelt werden, wobei der Auskoppelabschnitt die optisch wirksame Struktur aufweist, die eine Umlenkung der Lichtbündel zur Auskopplung bewirkt.

Ferner wird eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik bereitgestellt, die ein erfindungsgemäßes Optikelement aufweist und die das erzeugte Bild im auf dem Kopf des Benutzers aufgesetzten Zustand der Haltevorrichtung so abbildet, dass es der Benutzer als virtuelles Bild wahrnehmen kann.

Die Abbildungsoptik kann das Optikelement als einziges optisches Element aufweisen. Es ist jedoch auch möglich, dass die Abbildungsoptik neben dem Optikelement noch zumindest ein weiteres optisches Element umfaßt.

Die Anzeigevorrichtung kann eine Steuereinheit aufweisen, die das Bilderzeugungsmodul ansteuert.

Das Bilderzeugungsmodul kann insbesondere einen flächigen Bildgeber aufweisen, wie z.B. ein LCD-Modul, ein LCoS-Modul, ein OLED-Modul oder eine Kippspiegelmatrix. Der Bildgeber kann eine Mehrzahl von Pixeln aufweisen, die z.B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfaches Bild erzeugt.

Die erfindungsgemäße Anzeigevorrichtung kann weitere, dem Fachmann bekannte Elemente aufweisen, die zu ihrem Betrieb notwendig sind.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Es zeigen:
- Fig. 1: eine Ausführungsform der erfindungsgemäßen Anzeigevorrichtung;
- Fig. 2: eine vergrößerte Teilschnittansicht des erfindungsgemäßen Optikelementes 1 einschließlich einer schematischen Darstellung des Bilderzeugungsmoduls;
- Fig. 3: eine schematisch vergrößerte Ansicht auf die Rückseite 12 des Optikelementes 1 im Bereich des Lichtführungskanals 17 und des Auskoppelabschnitts 14;
- Fig. 4: ein Ablaufdiagramm zur Beschreibung eines Verfahrens zur Herstellung des erfindungsgemäßen Optikelementes;
- Fig. 5: eine vergrößerte Schnittansicht des ersten transparenten Teilkörpers zur Erläuterung der Herstellung des erfindungsgemäßen Optikelementes;
- Fig. 6: eine Schnittansicht des ersten transparenten Teilkörpers mit aufgebrachter reflektiver Beschichtung;
- Fig. 7: eine Schnittansicht des ersten transparenten Teilkörpers mit aufgebrachter Schutzschicht;
- Fig. 8: eine Schnittansicht des fertiggestellten erfindungsgemäßen Optikelementes 1;
- Fig. 9: eine Schnittansicht des ersten transparenten Teilkörpers zur Erläuterung einer Abwandlung des Schrittes des Aufbringens der Schutzschicht;
- Fig. 10: eine Schnittansicht des fertiggestellten erfindungsgemäßen Optikelementes mit einer Schutzschicht gemäß Fig. 9;
- Fig. 11: eine Schnittansicht zur Erläuterung einer weiteren Ausführungsform zur Aufbringung der Schutzschicht;
- Fig. 12: eine Schnittansicht des erfindungsgemäßen Optikelementes mit einer Schutzschicht gemäß Fig. 11, und
- Fig. 13: eine Schnittansicht einer Abwandlung des erfindungsgemäßen Optikelementes.

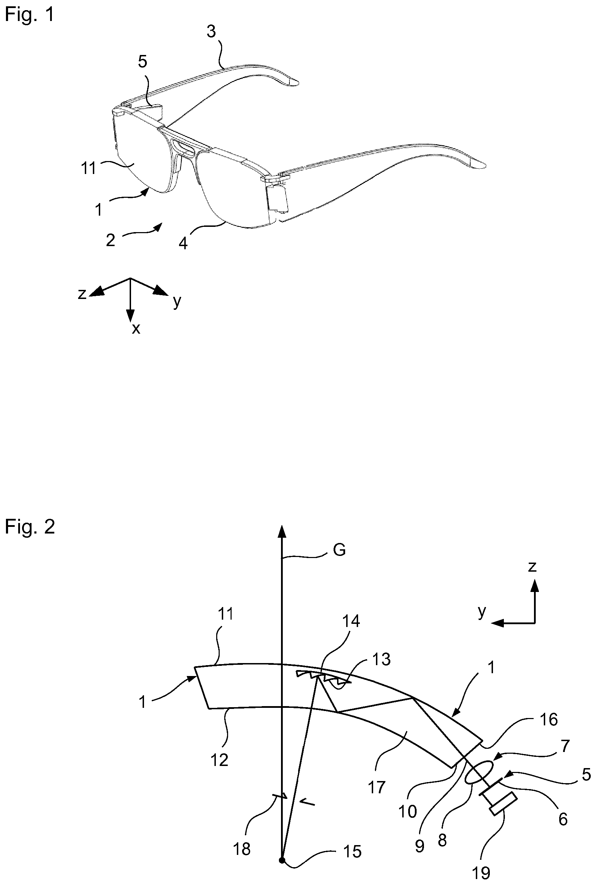

Bei der in Fig. 1 gezeigten Ausführungsform ist das erfindungsgemäße Optikelement 1 als Brillenglas (hier rechtes Brillenglas) einer auf den Kopf eines Benutzers aufsetzbaren Anzeigevorrichtung 2 ausgebildet.

Die Anzeigevorrichtung 2 umfaßt eine auf dem Kopf des Benutzers aufsetzbare Haltevorrichtung 3, die z.B. nach Art eines herkömmlichen Brillengestells ausgebildet sein kann, sowie das erfindungsgemäße Optikelement 1 als rechtes Brillenglas und ein zweites Brillenglas 4, die an der Haltevorrichtung 3 befestigt sind. Die Haltevorrichtung 3 mit den Brillengläsern 1 und 4 kann z.B. als Sportbrille, Sonnenbrille und/oder Brille zur Korrektur einer Fehlsichtigkeit ausgebildet sein, wobei dem Benutzer über das Optikelement 1 ein virtuelles Bild in sein Gesichtsfeld eingespiegelt werden kann, wie nachfolgend beschrieben wird.

Dazu umfaßt die Anzeigevorrichtung 2 ein Bilderzeugungsmodul 5, das im Bereich des rechten Brillenbügels der Haltevorrichtung 3 angeordnet sein kann, wie in Fig. 1 schematisch dargestellt ist. Das Bilderzeugungsmodul 5 kann ein flächiges Bilderzeugungselement 6, wie z.B. einen OLED-, LCD- oder LCoS-Chip oder eine Kippspiegelmatrix, mit einer Vielzahl von z.B. in Spalten und Zeilen angeordneten Pixeln aufweisen.

Die Brillengläser 1 und 4 und insbesondere das erste Brillenglas 1 sind nur beispielshalber zusammen mit der erfindungsgemäßen Anzeigevorrichtung 1 beschrieben. Die Brillengläser 1, 4 bzw. zumindest das erste Brillenglas 1 sind jeweils für sich als erfindungsgemäßes Brillenglas 1, 4 oder als erfindungsgemäßes optisches Element ausgebildet. Das erfindungsgemäße optische Element kann auch in anderem Zusammenhang als mit der hier beschriebenen Anzeigevorrichtung 2 eingesetzt werden. Ferner kann das Optikelement 1, wenn es als Brillenglas ausgebildet ist, natürlich auch als zweites Brillenglas 4 ausgebildet sein.

Wie am besten aus der vergrößerten Teilschnittansicht in Fig. 2 ersichtlich ist, weist die Anzeigevorrichtung 2 eine Abbildungsoptik 7 auf, die eine zwischen dem Bilderzeugungselement 6 bzw. dem Bildgeber 6 und dem ersten Brillenglas 1 angeordnete Linse 8 enthält. Des weiteren dient das erste Brillenglas 1 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 19, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch von dem Lichtstrahl 9 die Rede ist.

Der vom Bildgeber 6 ausgehende Lichtstrahl 9 läuft durch die Linse 8 und tritt über eine Stirnseite 10 des ersten Brillenglases 1 in das erste Brillenglas 1 ein. Der Lichtstrahl 9 trifft dann auf eine Vorderseite 11 des ersten Brillenglases 1, wobei der Auftreffwinkel so vorgegeben ist, dass eine interne Totalreflexion stattfindet. Nach einer erneuten inneren Totalreflexion an einer Rückseite 12 des ersten Brillenglases 1 trifft der Lichtstrahl 9 auf eine von mehreren reflektiven Umlenkflächen 13 eines Auskoppelabschnittes 14 des ersten Brillenglases 1 und wird von der reflektiven Umlenkfläche 13 so zur Rückseite 12 reflektiert, dass der Lichtstrahl über die Rückseite 12 aus dem ersten Brillenglas 1 austritt.

Somit kann ein Benutzer, wenn er die erfindungsgemäße Anzeigevorrichtung 2 bestimmungsgemäß auf dem Kopf trägt, das mittels des Bildgebers 6 erzeugte Bild als virtuelles Bild wahrnehmen, wenn er auf den Auskoppelabschnitt 14 blickt. Bei der hier beschriebenen Ausführungsform muß der Benutzer bezogen auf die Blickrichtung G eines Geradeausblicks etwas nach rechts schauen. In Fig. 2 ist zur Verdeutlichung der Drehpunkt 15 das Auge des Benutzers sowie die Eyebox 18 bzw. die Austrittspupille 18 der Abbildungsoptik 7 eingezeichnet. Die Eyebox 18 ist der Bereich, der durch die Anzeigevorrichtung 2 bereitgestellt wird und in dem sich das Auge des Benutzers bewegen kann und er stets noch das erzeugte Bild als virtuelles Bild sehen kann.

Der Abschnitt des ersten Brillenglases 1, über den der Lichtstrahl 9 in das Brillenglas 1 eingekoppelt wird, kann als Einkoppelabschnitt 16 bezeichnet werden. Obwohl bei der beschriebenen Ausführungsform eine Einkopplung über die Stirnseite 10 beschrieben ist, ist es auch möglich, eine Einkopplung über die Rückseite 12 des ersten Brillenglases 1 durchzuführen.

Die Bereiche der Vorder- und Rückseite 11, 12 des ersten Brillenglases 1, in denen der Lichtstrahl 9 durch innere Totalreflexion von dem Einkoppelabschnitt 16 bis zu dem Auskoppelabschnitt 14 geführt werden, bilden einen Lichtführungskanal 17, in dem die Lichtbündel 9 vom Einkoppelabschnitt 16 bis zum Auskoppelabschnitt 14 geführt werden.

Bei der Darstellung in Fig. 2 ist lediglich nur eine innere Totalreflexion an der Vorderseite 11 sowie an der Rückseite 12 dargestellt. Dies ist jedoch als rein schematische Darstellung zu verstehen. Natürlich können mehrere innere Totalreflexionen stattfinden. Ferner ist es auch möglich, die Vorder- und/oder Rückseite im Bereich des Lichtführungskanals 17 mit einer reflektiven oder teilreflektiven Beschichtung zu versehen, so dass die Lichtführung im Lichtführungskanal 17 durch eine normale Reflexion an der entsprechenden Reflexionsfläche bewirkt wird. Es ist ferner möglich, im ersten Brillenglas 1 eine oder zwei reflektiven Schichten anzuordnen, die jeweils von Vorderseite 11 und Rückseite 12 beabstandet sind und zur Lichtführung dienen und somit den Lichtführungskanal 17 (zumindest teilweise) bilden.

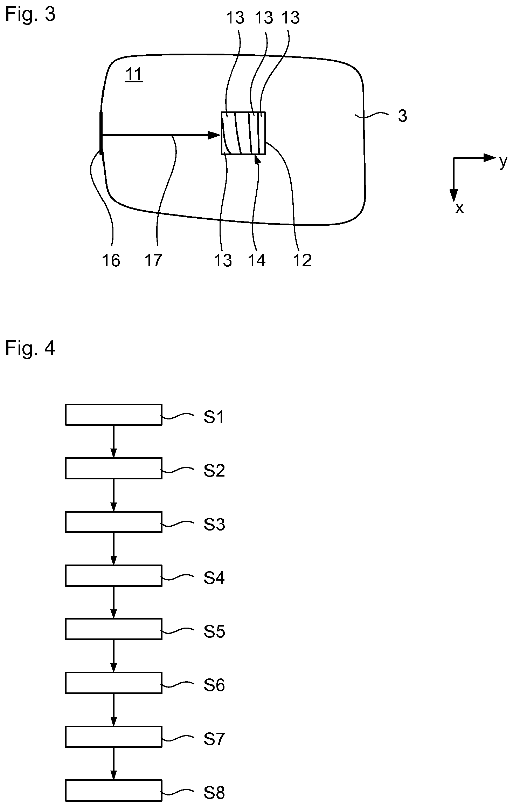

In der in Fig. 3 gezeigten Ansicht der Vorderseite 11 sind schematisch der Einkoppelabschnitt 16, der Lichtführungskanal 17 sowie der Auskoppelabschnitt 14 mit den reflektiven Umlenkflächen 13 (bzw. reflektive Facetten 13) dargestellt.

Nachfolgend wird ein Verfahren zur Herstellung des erfindungsgemäßen Optikelementes 1 beschrieben.

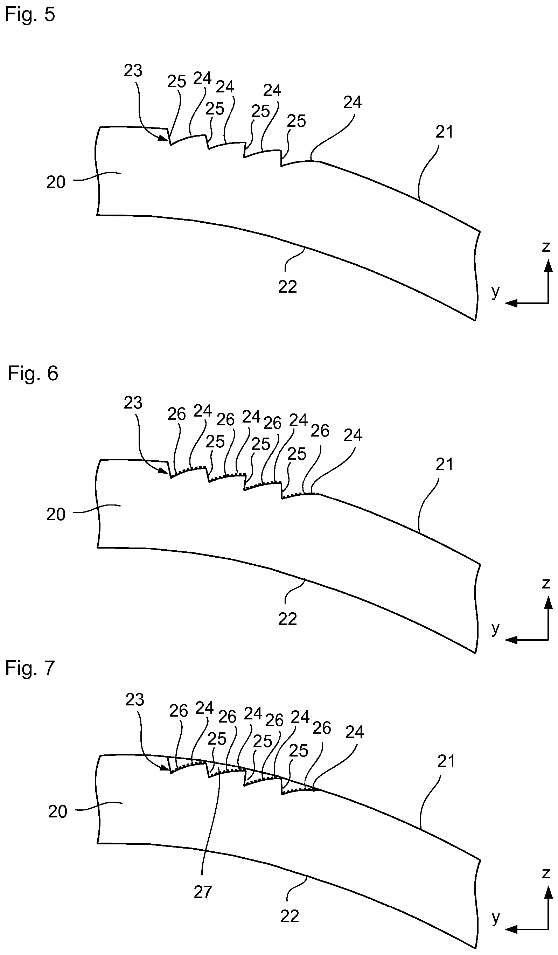

In einem ersten Schritt S1 (Fig. 4) wird mittels Spritzgießens ein erster für einen vorbestimmten Wellenlängenbereich transparenter Teilkörper 20, der in Fig. 5 gezeigt ist, aus einem thermoplastischen Material hergestellt. Der erste Teilkörper 20 weist eine vordere Grenzfläche 21 und eine hintere Grenzfläche 22 auf. Die hintere Grenzfläche 22 kann beispielsweise im fertiggestellten Optikelement 1 die Rückseite 12 bilden. Der vorbestimmte Wellenlängenbereich ist hier der sichtbare Wellenlängenbereich, der sich von ca 380 nm bis 780 nm erstreckt.

Auf der vorderen Grenzfläche 21 weist der erste transparente Teilkörper 20 eine Strukturierung 23 auf, die in der in Fig. 4 gezeigten vergrößerten Schnittansicht eines Teils des ersten transparenten Teilkörpers 20 gut erkennbar ist. Die Strukturierung ist eine Zick-Zack-Struktur mit gekrümmt ausgebildeten Hauptflanken 24, die jeweils mit Nebenflanken 25 verbunden sind. Die Hauptflanken 24 sind hier gekrümmt dargestellt. Sie können jedoch auch plan ausgebildet sein. Der in Fig. 4 gezeigte erste transparente Teilkörper 20 kann auch als Zwischenspritzling bezeichnet werden.

Der erste transparente Teilkörper 20 gemäß Fig. 4 kann falls nötig und/oder gewünscht im Schritt S2 gereinigt und für einen nachfolgenden Beschichtungsschritt S3 aktiviert werden. Die Aktivierung kann sich auf die zu beschichtenden Hauptflanken 24 beschränken. Für das Reinigen und Aktivieren kann der erste Teilkörper 20 in ein Ultraschalltauchbad gebracht werden. Die Aktivierung kann z.B. basisch oder mittels Klimmentladung durchgeführt werden. Zur Aktivierung kann ferner eine dünne Lackschicht mit einer Dicke im Bereich von 2 bis 10 µm aufgebracht werden. Auch kann eine SeO₂-Beschichtung mit wenigen 10 nm Dicke aufgebracht werden. Dies kann beispielsweise mittels Plasma, CVD (chemisches Abscheiden aus der Gasphase) oder PVD (physikalisches Abscheiden aus der Gasphase) erfolgen.

In dem Beschichtungsschritt S3 wird nur die Strukturierung 23 (und hier nur die Hauptflanken 24) mit einer reflektierenden Beschichtung 26 versehen (Fig. 6). Dies kann beispielsweise durch entsprechendes Maskieren der vorderen Grenzfläche 21 und nachfolgendem Sputtern, Lackieren bzw. Aufbringen einer Lackschicht und/oder Aufdampfen (durch z.B. chemisches Abscheiden aus der Gasphase oder physikalisches Abscheiden aus der Gasphase) durchgeführt werden.

Nach dem Schritt S3 kann als Schritt S4 ein Reinigungs- und Aktivierungsschritt durchgeführt werden. Der Schritt S4 kann gleich oder ähnlich zum Schritt S2 sein.

Als nächstes wird im Schritt S5 die Strukturierung 23 und insbesondere die reflektierende Beschichtung 26 mit einer Schutzschicht 27 überzogen (Fig. 7). Dazu wird ein chemisch vernetzendes Polymer aufgetragen, das möglichst die gleichen optischen Eigenschaften aufweist wie das Material für den ersten transparenten Teilkörper 20. Der Auftrag des chemisch vernetzenden Polymers wird bevorzugt durch ein sogenanntes RIM-Verfahren (Reaction Injection Moulding-Verfahren) durchgeführt. Dabei werden zwei Komponenten, wie z.B. Polyol und Isocyanat miteinander vermischt und dann unter Druck in eine Form injiziert, in der der erste transparente Teilkörper 20 so positioniert ist, dass die gewünschte Ausbildung der Schutzschicht 27 erfolgt. Die zwei Komponenten reagieren miteinander, so dass das gewünschte chemisch vernetzte Polymer (hier z.B. Polyurethan) gebildet wird.

Der Vorteil des Einsatzes des RIM-Verfahrens liegt hier darin, dass der notwendige Druck deutlich geringer ist im Vergleich zum herkömmlichen Spritzgießen von thermoplastischen Materialien, wodurch sichergestellt werden kann, dass die Strukturierung 23 mit der reflektierenden Beschichtung 26 beim Aufbringen der Schutzschicht 27 nicht beschädigt wird.

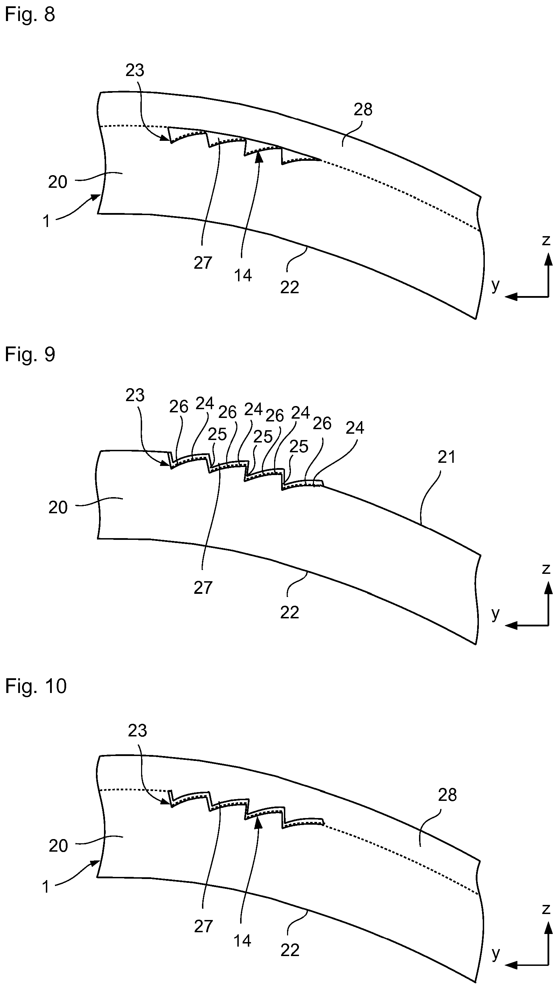

Nach Aufbringen der Schutzschicht 27 wird ein weiterer Spritzgußschritt S6 (der auch als Overmoulding bezeichnet werden kann) mit dem gleichen Material wie für den ersten transparenten Teilkörper durchgeführt, um eine Abschluß- oder Deckschicht 28 aufzubringen und damit das Optikelement fertigzustellen (Fig. 8). Die Abschlußschicht 28 kann auch als Deckschicht 28 bezeichnet werden. In Fig. 8 ist eine gestrichelte Trennlinie zwischen der Abschlußschicht 28 und dem ersten transparenten Teilkörper 20 eingezeichnet, um die beiden Elemente 28 und 20 zu kennzeichnen. Tatsächlich ist eine solche Trennlinie nicht vorhanden.

Durch die beschriebenen Verfahrensschritte wird nämlich erreicht, dass das Optikelement 1 neben der Strukturierung 23 homogen aus einem Material aufgebaut ist und über identische oder nahezu identische Eigenschaften (insbesondere mechanische, optische, chemische und/oder physikalische Eigenschaften) verfügt, da das gleiche Material beim Spritzgießen des ersten transparenten Teilkörpers 20 und beim Aufbringen der Abschlußschicht 28 zum Fertigstellen des Optikelements 1 verwendet wird.

Die Materialien für den ersten transparenten Teilkörper 20 und die Abschluß- bzw. Deckschicht 28 sind bevorzugt so gewählt, dass sich die Brechzahlen der beiden Materialien für zumindest eine Wellenlänge aus dem vorbestimmten Wellenlängenbereich um nicht mehr als 0,001 und insbesondere um nicht mehr als 0,0005 unterscheiden. Insbesondere sind die Materialien so gewählt, dass die Dispersion im vorbestimmten Wellenlängenbereich gleich ist bzw. sich nur so gering voneinander unterscheidet, dass dies optisch keinen nachteiligen Effekt beim bestimmungsgemäßen Gebrauch des erfindungsgemäßen Optikelementes 1 nach sich zieht.

Nach dem Schritt S6 kann optional als Schritt S7 ein Entspannungstempern durchgeführt werden.

Ferner kann weiterhin optional als Schritt S8 ein Vergüten der durch die vom ersten Teilkörper 20 weg weisenden Materialgrenzfläche der Deckschicht 28 gebildeten Vorderseite 11 erfolgen.

Dazu kann beispielsweise eine Hartschicht (Polysiloxan), eine Antireflexionsschicht oder sonstige Schichten aufgebracht werden.

Mit dem beschriebenen Vorgehen ist es möglich, den Auskoppelabschnitt 14 frei im Volumen des fertiggestellten erfindungsgemäßen Optikelement 1 zu plazieren und damit auch gegenüber äußeren Umwelteinflüssen zu schützen.

In Fig. 9 ist eine Abwandlung des Schrittes S5 gemäß Fig. 7 gezeigt. Bei dieser Abwandlung wird das RIM-Verfahren so durchgeführt, dass die durch die Haupt- und Nebenflanken 24, 25 gebildeten Vertiefungen nicht vollständig aufgefüllt werden. Das entsprechende fertige Optikelement ist in Fig. 10 dargestellt. Auch hier ist in gleicher Weise wie in Fig. 8 eine gestrichelte Trennlinie eingezeichnet, die jedoch tatsächlich nicht vorhanden ist.

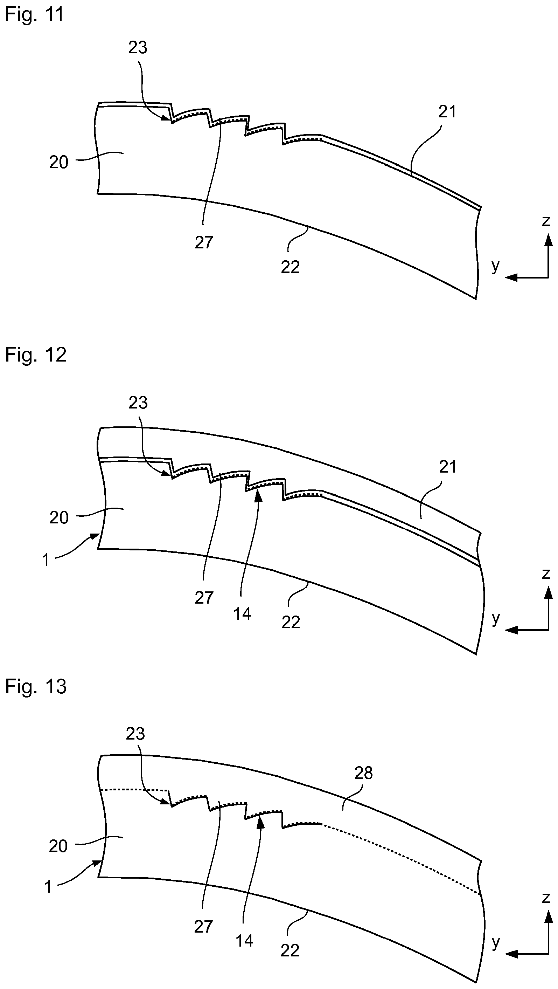

In Fig. 11 ist eine Abwandlung des Schritts S5 gemäß Fig. 7 gezeigt, bei der die Beschichtung mittels des RIM-Verfahrens so durchgeführt wird, dass die gesamte vordere Grenzfläche 21 beschichtet wird. Darauf wird dann im Schritt S6 das thermoplastische Material aufgebracht, um das erfindungsgemäße Optikelement 1 fertigzustellen, wie in Fig. 12 angedeutet ist.

In einer weiteren Abwandlung kann nach dem Schritt S3 gemäß Fig. 6 oder nach dem Schritt S4 der RIM-Schritt S7 so durchgeführt werden, dass mittels dieses Schrittes die Abschlußschicht 28 gebildet wird, die auch gleichzeitig die Strukturierung 23 auffüllt und insbesondere die reflektierende Beschichtung 26 bedeckt. Das fertiggestellte Optikelement 1 ist schematisch in Fig. 13 gezeigt. Die Trennlinie zwischen dem ersten transparenten Teilkörper 20 und der Abschlußschicht 28 soll nur verdeutlichen, dass die beiden Schichten nacheinander hergestellt wurden. Da die Abschlußschicht 28 mittels des RIM-Verfahrens hergestellt ist, erfolgt eine chemische Anbindung des Materials, so dass keine sichtbare Trennschicht vorhanden ist. Die eingezeichnete Trennschicht dient nur zur Verdeutlichung der durchgeführten Verfahrensschritte.

In einer Abwandlung der in Verbindung mit Fig. 4 bis 13 beschriebenen Verfahren kann der erste transparente Teilkörper 20 nicht durch Spritzgießen gebildet werden, sondern durch Formpressen oder Formprägen. Ferner ist es möglich, den ersten transparenten Teilkörper 20 mittels des RIM-Verfahrens herzustellen.

Bei allen Verfahrensschritten können die beschriebenen Schichten in einem oder in mehreren Schritten gebildet werden. So kann der erste transparente Teilkörper 20 in zwei oder mehr Schritten gebildet werden. Das gleiche gilt für die Abschlußschicht 28. Dies ist insbesondere im Hinblick auf den nicht zu vermeidenden Schwund bei der Herstellung der Schichten von Vorteil, da der Schwund volumenabhängig ist. Wenn die Schicht aus mehreren Teilschichten gebildet wird, ist der Gesamtschwund geringer im Vergleich zur Bildung der Schicht als Ganzes in einem Schritt. Die Bildung des ersten transparenten Teilkörpers 20 und/oder der Abschlußschicht 28 aus mehreren Teilschichten in zwei oder mehreren nacheinander folgenden Schritten sind insbesondere bei dem Einsatz des RIM-Verfahrens von Vorteil, da dieses in der Regel einen relativ großen Volumenschwund aufweisen kann, der durchaus im Bereich von 5 bis 15 % liegen kann.

Bei dem RIM-Verfahren kann die Vernetzung des Polymers nicht nur durch Mischen von zwei Komponenten induziert werden, sondern beispielsweise auch thermisch und/oder durch UV-Belichtung.

## Patentansprüche

1. Verfahren zum Herstellen eines Optikelementes (1), das einen für einen vorbestimmten Wellenlängenbereich transparenten Körper aufweist, in dem eine optisch wirksame Struktur (14) eingebettet ist, wobei das Verfahren folgende Schritte aufweist
a) Bereitstellen eines ersten für den vorbestimmten Wellenlängenbereich transparenten Teilkörpers (20), der an seiner Oberseite (21) einen strukturierten Abschnitt (23) aufweist,
b) Aufbringen einer für den vorbestimmten Wellenlängenbereich optisch wirksamen Beschichtung (26) auf den strukturierten Abschnitt (23), um die optisch wirksame Struktur (14) zu bilden, und
c) Aufbringen einer für den vorbestimmten Wellenlängenbereich transparenten Deckschicht (28) auf der Oberseite (21) des ersten Teilkörpers (20) einschließlich des strukturierten Abschnittes (23),
wobei nach dem Schritt b) und vor dem Schritt c) auf der optisch wirksamen Beschichtung (26) eine Schutzschicht (27) aus duroplastischem Material durch Gießen aufgebracht wird,
**dadurch gekennzeichnet, dass**
im Schritt c) die Deckschicht (28) mittels Gießens von thermoplastischem Material auf der Schutzschicht (27) aufgebracht wird.

2. Verfahren nach Anspruch 1, bei dem die Schritte a)-c) so ausgeführt werden, dass im Schritt b) als optisch wirksamen Beschichtung (26) eine reflektierende Beschichtung (26) aufgebracht wird.

3. Verfahren nach Anspruch 1 oder 2, bei dem die Schritte a)-c) so ausgeführt werden, dass die optisch wirksame Struktur (14) voneinander beabstandete reflektive Flächenstücke (13) aufweist.

4. Verfahren nach einem der obigen Ansprüche, bei dem das Aufbringen der Deckschicht (28) im Schritt c) in zumindest zwei aufeinanderfolgenden Teilschritten durchgeführt wird.

5. Verfahren nach einem der obigen Ansprüche, bei dem im Schritt c) die Deckschicht (28) auf der gesamten Oberseite (21) des ersten Teilkörpers (20) einschließlich der Schutzschicht (27) gebildet wird.

6. Verfahren nach einem der obigen Ansprüche, bei dem der erste Teilkörper (20) aus einem ersten Polymermaterial gebildet ist und im Schritt c) zum Aufbringen der Deckschicht (28) ein zweites Polymermaterial auf die Oberseite (21) des ersten Teilkörpers (20) aufgebracht und eine chemische Anbindung des zweiten Polymermaterials an das erste Polymermaterial bewirkt wird.

7. Verfahren nach Anspruch 6, bei dem als erstes und zweites Polymermaterial solche Materialen verwendet werden, deren Brechzahlen sich für zumindest eine Wellenlänge aus dem vorbestimmten Wellenlängenbereich um nicht mehr als 0,005 unterscheiden.

8. Verfahren nach einem der obigen Ansprüche, bei dem im Schritt c) das thermoplastische Material mittels eines Spritzgußverfahrens aufgebracht wird.

9. Verfahren nach einem der obigen Ansprüche, bei dem im Schritt a) zum Bereitstellen des ersten Teilkörpers (20) dieser aus duroplastischem Material mittels eines RIM-Verfahrens gebildet wird.

10. Verfahren nach Anspruch 9, bei dem das Aufbringen des duroplastischen Materials mittels des RIM-Verfahrens in zumindest zwei aufeinander folgenden Teilschritten durchgeführt wird.

11. Verfahren nach einem der obigen Ansprüche, bei dem die Deckschicht (28) im Schritt c) so gebildet wird, dass eine vom ersten Teilkörper (20) weg weisende Grenzfläche der Deckschicht (28) eine Grenzfläche des Optikelementes (1) bildet.

12. Verfahren nach einem der obigen Ansprüche, bei dem die Schritte a)-c) so durchgeführt werden, dass die optisch wirksame Struktur (14) vollständig im transparenten Körper eingebettet ist.

13. Optikelement mit einem transparenten Körper (20, 28), in dem eine optisch wirksame Struktur (14) eingebettet ist, das durch die Schritte eines der Ansprüche 1 bis 12 hergestellt ist.

14. Optikelement nach Anspruch 13, das als Brillenglas für eine dem Kopf eines Benutzers aufsetzbare und ein Bild erzeugende Anzeigevorrichtung (2) ausgebildet ist sowie eine Vorderseite (11) und eine Rückseite (12),
einen Einkoppelabschnitt (16) und einen vom Einkoppelabschnitt (16) beabstandeten Auskoppelabschnitt (14) und
einen Lichtführungskanal (17) aufweist, der dazu geeignet ist, Lichtbündel (9) von Pixeln des erzeugten Bildes, die über den Einkoppelabschnitt (16) des Optikelementes (1) in das Optikelement (1) eingekoppelt sind, im Optikelement (1) bis zum Auskoppelabschnitt (14) zu führen, von dem sie aus dem Optikelement (1) ausgekoppelt werden,
wobei der Auskoppelabschnitt (14) die optisch wirksame Struktur aufweist, die eine Umlenkung der Lichtbündel (9) zur Auskopplung bewirken.

15. Anzeigevorrichtung mit
einer auf den Kopf eines Benutzers aufsetzbaren Haltevorrichtung (3),
einem an der Haltevorrichtung (3) befestigten Bilderzeugungsmodul (5), das ein Bild erzeugt, und
einer an der Haltevorrichtung (3) befestigten Abbildungsoptik, die ein Optikelement (1) nach Anspruch 14 aufweist und die das erzeugte Bild im auf dem Kopf des Benutzers aufgesetzten Zustand der Haltevorrichtung (3) so abbildet, dass es der Benutzer als virtuelles Bild wahrnehmen kann.

## Claims

1. Method for producing an optical element (1) comprising a body which is transparent to a predetermined wavelength range and in which an optically effective structure (14) is embedded, the method comprising the following steps
a) providing a first partial body (20) which is transparent to the predetermined wavelength range and which has a structured portion (23) on its top side (21);
b) applying a coating (26) which is optically effective for the predetermined wavelength range to the structured portion (23) in order to form the optically effective structure (14), and
c) applying a cover layer (28) transparent to the predetermined wavelength range on the top side (21) of the first partial body (20) including the structured portion (23);
wherein after step b) and before step c) a protective layer (27) of thermosetting material is applied to the optically effective coating (26) by casting,
**characterized in that**
in step c) the cover layer (28) is applied to the protective layer (27) by casting thermoplastic material.

2. Method according to Claim 1, wherein steps a)-c) are carried out in such a way that in step b) a reflective coating (26) is applied as an optically effective coating (26) .

3. Method according to Claim 1 or 2, wherein steps a)-c) are carried out in such a way that the optically effective structure (14) has spaced apart reflective surface elements (13).

4. Method according to any of the preceding claims, wherein the application of the cover layer (28) in step c) is carried out in at least two successive partial steps.

5. Method according to any of the preceding claims, wherein in step c) the cover layer (28) is formed on the entire top side (21) of the first partial body (20) including the protective layer (27).

6. Method according to any of the preceding claims, wherein the first partial body (20) is formed from a first polymer material and in step c), for applying the cover layer (28), a second polymer material is applied to the top side (21) of the first partial body (20), and the second polymer material is chemically bonded to the first polymer material.

7. Method according to Claim 6, wherein materials whose refractive indices differ by no more than 0.005 for at least one wavelength from the predetermined wavelength range are used as the first and second polymer materials.

8. Method according to any of the preceding claims, wherein in step c) the thermoplastic material is applied by means of an injection moulding process.

9. Method according to any of the preceding claims, wherein in order to provide the first partial body (20) in step a), the latter is formed from thermosetting material by means of a RIM method.

10. Method according to Claim 9, wherein the thermosetting material is applied by means of the RIM method in at least two successive partial steps.

11. Method according to any of the preceding claims, wherein the cover layer (28) in step c) is formed such that an interface of the cover layer (28) facing away from the first partial body (20) forms an interface of the optical element (1).

12. Method according to any of the preceding claims, wherein steps a)-c) are carried out in such a way that the optically effective structure (14) is completely embedded in the transparent body.

13. Optical element having a transparent body (20, 28) in which an optically effective structure (14) is embedded, produced by the steps of any of Claims 1 to 12.

14. Optical element according to Claim 13, designed as a spectacle lens for a picture-generating display device (2) wearable on the head of a user and comprising a front side (11) and a rear side (12),
an input coupling portion (16) and an output coupling portion (14) spaced apart from the input coupling portion (16) and
a light guide channel (17) which is suitable for guiding light beams (9), which are coupled into the optical element (1) via the input coupling portion (16) of the optical element (1), in the optical element (1) from pixels of the generated image to the output coupling portion (14), from which they are coupled out of the optical element (1),
wherein the output coupling portion (14) comprises the optically effective structure which brings about a deflection of the light beams (9) for output coupling purposes.

15. Display device comprising
a holding device (3), which is wearable on the head of a user,
a picture-generating module (5), which is secured to the holding device (3) and generates an image, and
an imaging optics unit, which is secured to the holding device (3), which comprises an optical element (1) according to Claim 14 and which, in the state in which the holding device (3) is worn on the head of the user, images the generated image such that the user can perceive said image as a virtual image.

## Revendications

1. Procédé de fabrication d'un élément optique (1), qui comporte un corps transparent pour une plage de longueurs d'onde prédéfinie, dans lequel est incorporée une structure à effet optique (14), le procédé comportant les étapes suivantes
a) fourniture d'un premier corps partiel (20) transparent pour la plage de longueurs d'onde prédéfinie et comportant une section structurée (23) sur sa face supérieure (21),
b) application d'un revêtement à effet efficace (26) pour la plage de longueurs d'onde prédéfinie sur la section structurée (23) pour former la structure à effet optique (14), et
c) application d'une couche de recouvrement (28) transparente pour la plage de longueurs d'onde prédéfinie sur la face supérieure (21) du premier corps partiel (20) y compris de la section structurée (23),
une couche de protection (27) composée d'un matériau thermodurcissable étant appliquée, après l'étape b) et avant l'étape c), sur le revêtement à effet optique (26) par coulée,
**caractérisé en ce que**
dans l'étape c), la couche de recouvrement (28) est appliquée sur la couche de protection (27) par coulée d'un matériau thermoplastique.

2. Procédé selon la revendication 1, dans lequel les étapes a) à c) sont exécutées de telle sorte qu'un revêtement réfléchissant (26) est appliqué en tant que revêtement à effet optique (26) dans l'étape b).

3. Procédé selon la revendication 1 ou 2, dans lequel les étapes a) à c) sont exécutées de telle sorte que la structure à effet optique (14) comporte des parties de surface réfléchissantes (13) espacées les unes des autres.

4. Procédé selon l'une des revendications précédentes, dans lequel l'application de la couche de recouvrement (28) dans l'étape c) est effectuée en au moins deux étapes partielles successives.

5. Procédé selon l'une des revendications précédentes, dans lequel la couche de recouvrement (28) est formée, dans l'étape c), sur toute la face supérieure (21) du premier corps partiel (20), y compris la couche de protection (27) .

6. Procédé selon l'une des revendications précédentes, dans lequel le premier corps partiel (20) est formé à partir d'un premier matériau polymère et un deuxième matériau polymère est appliqué sur la face supérieure (21) du premier corps partiel (20) dans l'étape c) pour appliquer la couche de recouvrement (28), et une liaison chimique du deuxième matériau polymère au premier matériau polymère est entraînée.

7. Procédé selon la revendication 6, dans lequel des matériaux dont les indices de réfraction ne diffèrent pas de plus de 0,005 pour au moins une longueur d'onde de la plage de longueurs d'onde prédéfinie sont utilisés en tant que premier et deuxième matériau polymère.

8. Procédé selon l'une des revendications précédentes, dans lequel le matériau thermoplastique est appliqué dans l'étape c) au moyen d'un procédé de moulage par injection.

9. Procédé selon l'une des revendications précédentes, dans lequel le premier corps partiel (20) est formé à partir d'un matériau thermoplastique au moyen d'un procédé RIM dans l'étape a) pour fournir ledit premier corps partiel.

10. Procédé selon la revendication 9, dans lequel l'application du matériau thermoplastique au moyen du procédé RIM est effectuée en au moins deux étapes partielles successives.

11. Procédé selon l'une des revendications précédentes, dans lequel la couche de recouvrement (28) est formée dans l'étape c) de telle sorte qu'une interface de la couche de recouvrement (28) pointant de manière à s'éloigner du premier corps partiel (20) forme une interface de l'élément optique (1).

12. Procédé selon l'une des revendications précédentes, dans lequel les étapes a) à c) sont effectuées de telle sorte que la structure à effet optique (14) est complètement intégrée dans le corps transparent.

13. Elément optique avec un corps transparent (20, 28), dans lequel est intégrée une structure à effet optique (14), qui est fabriquée par les étapes de l'une des revendications 1 à 12.

14. Elément optique selon la revendication 13, qui est formé comme un verre de lunettes pour un dispositif d'affichage (2) pouvant être posé sur la tête d'un utilisateur et produisant une image, et qui comporte une face avant (11) et une face arrière (12),
une section d'injection (16) et une section de découplage (14) espacée de la section d'injection (16), et
un canal de guidage de lumière (17), qui est adapté pour guider des faisceaux lumineux (9) de pixels de l'image produite, qui sont injectés dans l'élément optique (1) par la section d'injection (16) de l'élément optique (1), dans l'élément optique (1) jusqu'à la section de découplage (14), depuis laquelle ils sont découplés hors de l'élément optique (1),
la section de découplage (14) comportant la structure à effet optique, qui entraîne une déviation des faisceaux lumineux (9) pour le découplage.

15. Dispositif d'affichage avec
un dispositif de maintien (3) pouvant être placé sur la tête d'un utilisateur,
un module de production d'image (5) fixé sur le dispositif de maintien (3), qui produit une image, et
une optique d'imagerie fixée sur le dispositif de maintien (3), qui comporte un élément optique (1) selon la revendication 14 et qui reproduit l'image produite dans l'état du dispositif de maintien (3) placé sur la tête de l'utilisateur de telle sorte que l'utilisateur peut la percevoir comme une image virtuelle.
